# EUROPEAN PATENT APPLICATION

(11) **EP 4 745 710 A1**
(43) Date of publication of application: **20.05.2026**
(21) Application number: 24838787.0
(22) Date of filing: 09.07.2024
(51) Int. Cl.: G06F 1/16, H04M 1/02

(54) **HINGE MECHANISM AND ELECTRONIC DEVICE**

(30) Priority: 13.07.2023 CN 202310869169
(71) Applicant: Vivo Mobile Communication Co., Ltd., Dongguan, Guangdong 523863 (CN)
(72) Inventor: YU, Changguo, Dongguan, Guangdong 523863 (CN)
(74) Representative: Lavoix
(86) International application number: PCT/CN2024/104370
(87) International publication number: WO 2025/011535

(57) **Abstract**

This application discloses a hinge mechanism and an electronic device, pertaining to the field of communication technology. The hinge mechanism includes a base, a swing arm assembly, a frame body, and a limiting assembly. A first end of the swing arm assembly is rotatably connected to the base. A second end of the swing arm assembly is connected to the frame body. A swing arm assembly is provided with a fitting connection portion. The frame body is provided with a fitting groove. The fitting connection portion extends into the fitting groove. The limiting assembly includes a pin shaft and a deformation member. The deformation member is disposed between the fitting connection portion and a wall surface of the fitting groove. The pin shaft is inserted through the frame body and abuts against the deformation member. During rotation of the pin shaft relative to the frame body, the deformation member deforms so as to limit the frame body and the swing arm assembly in a rotational axial direction of the pin shaft. The electronic device includes a first device body, a second device body, and the hinge mechanism. The first device body or the second device body is connected to the frame body. The first device body is connected to the second device body through the hinge mechanism. The first device body and the second device body can rotate relative to each other.

## Description

### CROSS-REFERENCE TO RELATED APPLICATIONS

This application claims priority to the Chinese Patent Application No. 202310869169.X, filed with the China National Intellectual Property Administration on July 13, 2023 and entitled "HINGE MECHANISM AND ELECTRONIC DEVICE", which is incorporated herein by reference in its entirety.

### TECHNICAL FIELD

This application pertains to the field of communication technology and specifically relates to a hinge mechanism and an electronic device.

### BACKGROUND

With the development of science and technology, in order to improve the portability and comfort of use of electronic devices, the application range of foldable electronic devices has become increasingly widespread.

In the related art, a foldable electronic device includes a first device body, a second device body, and a hinge mechanism. The first device body and the second device body can rotate relative to each other. The hinge mechanism includes a swing arm and a frame body. The swing arm is connected to the first device body or the second device body through the frame body, so that the swing arm can follow the rotation of the first device body or the second device body. Due to the existence of a fitting tolerance between the swing arm and the frame body, during the rotation of the swing arm, the swing arm is prone to shaking relative to the frame body, generating movements other than rotation, which causes the entire foldable electronic device to have a rubbing sensation, resulting in poor stability of the foldable electronic device.

### SUMMARY

Embodiments of this application are intended to provide a hinge mechanism and an electronic device, which can solve the problem of poor stability of electronic devices in the related art.

According to a first aspect, an embodiment of this application provides a hinge mechanism including a base, a swing arm assembly, a frame body, and a limiting assembly, where
a first end of the swing arm assembly is rotatably connected to the base, a second end of the swing arm assembly is connected to the frame body, the swing arm assembly is provided with a fitting connection portion, the frame body is provided with a fitting groove, and the fitting connection portion extends into the fitting groove; and
the limiting assembly includes a pin shaft and a deformation member, where the deformation member is disposed between the fitting connection portion and a wall surface of the fitting groove, the pin shaft is inserted through the frame body and abuts against the deformation member, and during rotation of the pin shaft relative to the frame body, the deformation member deforms so as to limit the frame body and the swing arm assembly in a rotational axial direction of the pin shaft.

According to a second aspect, an embodiment of this application further provides an electronic device including a first device body, a second device body, and the hinge mechanism described above, where the first device body or the second device body is connected to the frame body, and the first device body is connected to the second device body through the hinge mechanism; and
during relative rotation of the first device body and the second device body, the electronic device switches between an unfolded state and a folded state.

In the embodiments of this application, the swing arm assembly and the frame body are connected to each other through the fitting connection portion and the fitting groove. In addition, the deformation member is disposed in the fitting groove. The deformation member is driven by the pin shaft to deform and press the fitting connection portion, so that the fitting connection portion abuts against the wall surface of the fitting groove, achieving a tight fit between the fitting connection portion and the fitting groove, and avoiding the problem of shaking caused by clearance fit between the fitting connection portion and the fitting groove, that is, the existence of a fitting tolerance between the swing arm assembly and the frame body. This helps to improve the stability of the electronic device.

### BRIEF DESCRIPTION OF DRAWINGS

FIG. 1 is a schematic structural diagram of a hinge mechanism according to an embodiment of this application;
FIG. 2 is a schematic diagram of fitting between a synchronous swing arm and a cam seat according to an embodiment of this application;
FIG. 3 is a schematic diagram of a partial structure of a hinge mechanism according to an embodiment of this application;
FIG. 4 is a schematic structural diagram of a disc spring according to an embodiment of this application;
FIG. 5 is a schematic structural diagram of a disc spring according to an embodiment of this application from another perspective;
FIG. 6 is a front view of a disc spring according to an embodiment of this application;
FIG. 7 is a side view of a disc spring according to an embodiment of this application;
FIG. 8 is a cross-sectional view of a disc spring according to an embodiment of this application;
FIG. 9 is a schematic structural diagram of a pin shaft according to an embodiment of this application;
FIG. 10 is a cross-sectional view of a pin shaft according to an embodiment of this application;
FIG. 11 is an exploded view of a hinge mechanism according to an embodiment of this application;
FIG. 12 is a schematic structural diagram of a hinge mechanism according to an embodiment of this application in a case that a deformation member is not deformed;
FIG. 13 is a schematic structural diagram of a hinge mechanism according to an embodiment of this application in a case that a deformation member is deformed; and
FIG. 14 is a schematic structural diagram of an electronic device according to an embodiment of this application.

Description of reference signs:
100. synchronous swing arm; 110. slide rail;
200. virtual swing arm; 210. fitting connection portion;
300. frame body; 310. fitting groove; 320. threaded hole; 330. through hole; 340. slide groove;
400. elastic member; 410. disc spring; 411. concave surface; 412. convex surface;
500. pin shaft; 510. stud; 511. external thread; 520. protrusion structure;
600. gasket;
700. base;
800. cam seat;
910. first device body; and 920. second device body.

### DESCRIPTION OF EMBODIMENTS

The technical solutions in the embodiments of this application will be clearly described below in conjunction with the accompanying drawings in the embodiments of this application. Apparently, the described embodiments are only some rather than all of the embodiments of this application. All other embodiments obtained by those of ordinary skill in the art based on the embodiments in this application fall within the protection scope of this application.

The terms "first", "second", and the like in the description and claims of this application are used to distinguish similar objects and are not used to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, "and/or" in the specification and claims represents at least one of the connected objects, and the character "/" generally indicates that the contextually associated objects have an "or" relationship.

The following describes in detail a hinge mechanism and an electronic device according to embodiments of this application through specific embodiments and application scenarios thereof with reference to the accompanying drawings.

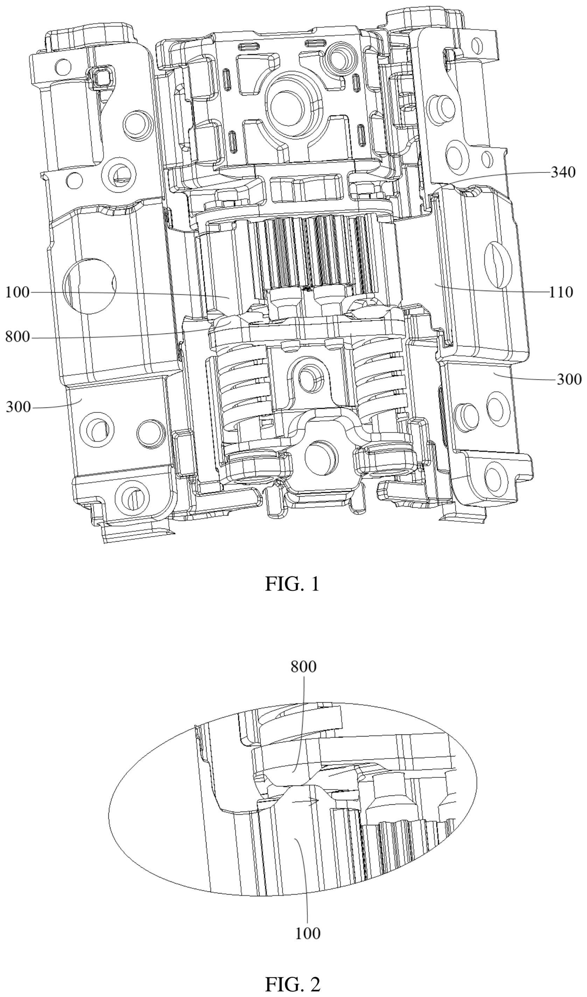

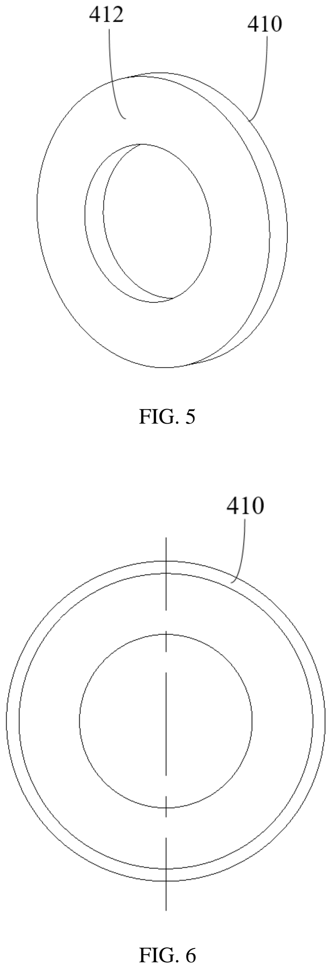

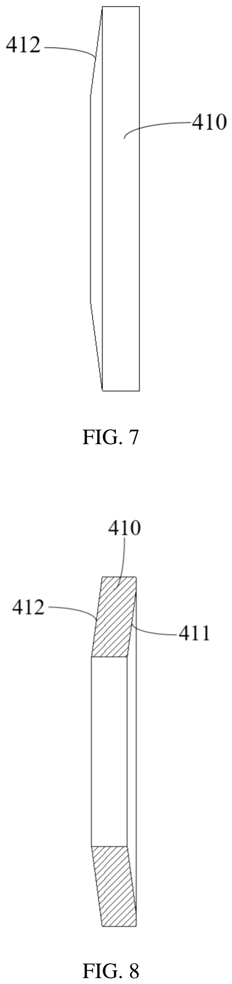

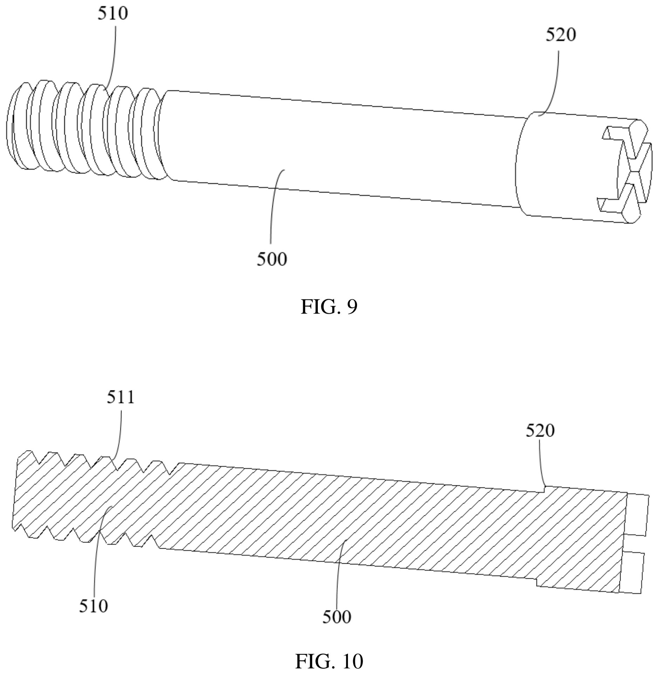

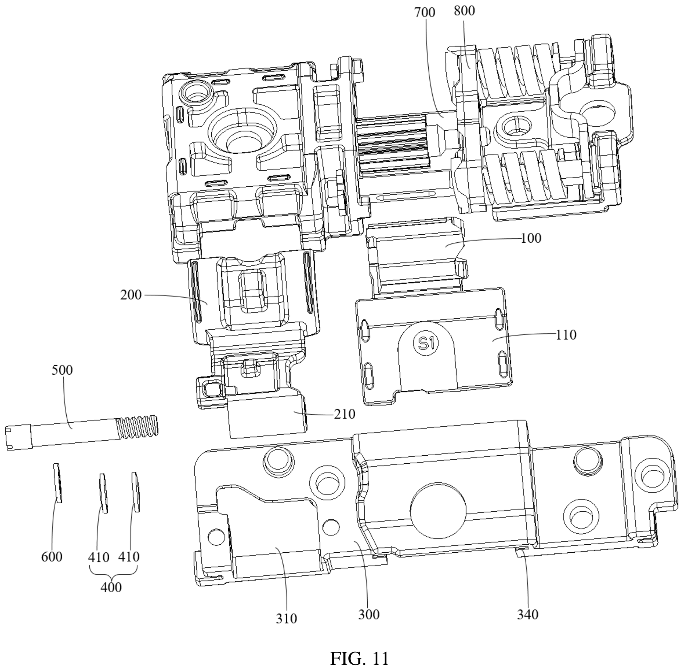

Referring to FIGs. 1 to 14, an embodiment of this application discloses a hinge mechanism including a base 700, a swing arm assembly, a frame body 300, and a limiting assembly, where the base 700 serves as a mounting foundation for the swing arm assembly. The swing arm assembly is rotatably disposed on the base 700. The frame body 300 is connected to the swing arm assembly. The limiting assembly is configured to limit a relative position between the frame body 300 and the swing arm assembly.

A first end of the swing arm assembly is rotatably connected to the base 700, and a second end of the swing arm assembly is connected to the frame body 300. Optionally, the swing arm assembly includes a synchronous swing arm 100 and a virtual swing arm 200. The base 700 is provided with a rotating shaft. The synchronous swing arm 100 is provided with an annular structure, and the annular structure is sleeved on the outside of the rotating shaft, so that the synchronous swing arm 100 can rotate around the rotating shaft relative to the base 700. The virtual swing arm 200 may be provided with an arc-shaped protrusion. The base 700 is provided with an arc-shaped groove. The arc-shaped protrusion extends into the arc-shaped groove and can rotate relative to the arc-shaped groove. In addition, an axis of rotation of the virtual swing arm 200 relative to the base 700 is different from an axis of rotation of the synchronous swing arm 100 relative to the base 700.

The swing arm assembly is provided with a fitting connection portion 210. The frame body 300 is provided with a fitting groove 310. The fitting connection portion 210 extends into the fitting groove 310. That is, the swing arm assembly and the frame body 300 are connected to each other through a structure with the fitting groove 310 and the fitting connection portion 210. Optionally, the virtual swing arm 200 is provided with the fitting connection portion 210.

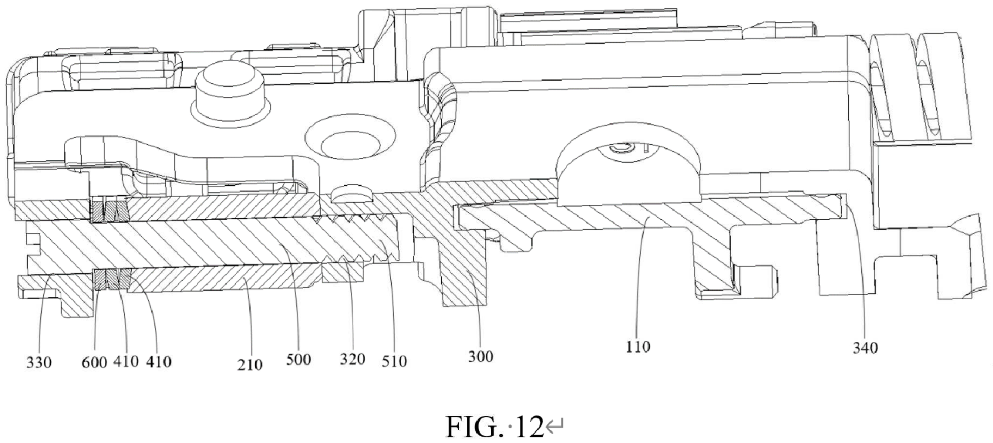

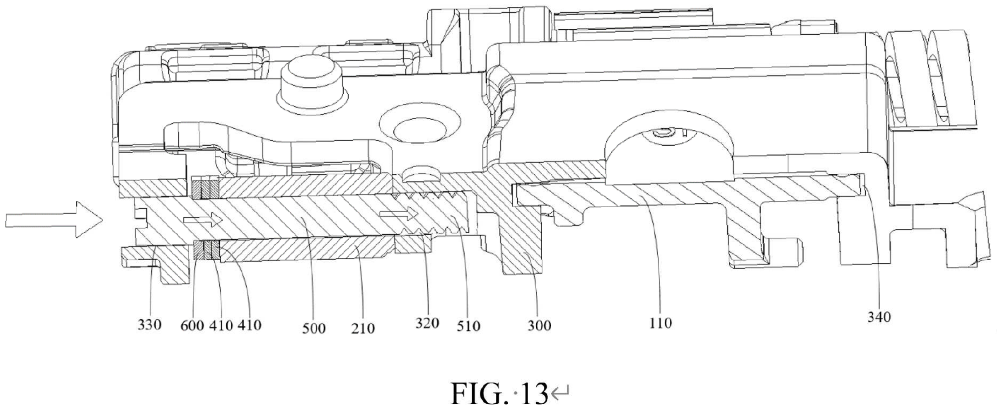

The limiting assembly includes a deformation member and a pin shaft 500. The deformation member is disposed between the fitting connection portion 210 and a wall surface of the fitting groove 310. As shown in FIG. 12, in a case that the deformation member is in an undeformed state, the deformation member does not press the fitting connection portion 210. In this case, the fitting connection portion 210 is in clearance fit with the wall surface of the fitting groove 310. As shown in FIG. 13, in a case that the deformation member is in a deformed state, the deformation member presses the fitting connection portion 210, so that the fitting connection portion 210 is in tight fit with the wall surface of the fitting groove 310, that is, the fitting connection portion 210 abuts against the wall surface of the fitting groove 310. The pin shaft 500 is inserted through the frame body 300 and abuts against the deformation member. During the rotation of the pin shaft 500 relative to the frame body 300, the pin shaft 500 generates displacement relative to the frame body 300 in its own rotational axial direction, and the deformation member deforms so as to limit the frame body 300 and the swing arm assembly in the rotational axial direction of the pin shaft 500. The rotational axial direction here refers to a direction in which a rotational axis of the pin shaft 500 is located.

In this embodiment of this application, the swing arm assembly and the frame body 300 are connected to each other through the fitting connection portion 210 and the fitting groove 310. In addition, the deformation member is disposed in the fitting groove 310. The deformation member is driven by the pin shaft 500 to deform and press the fitting connection portion 210, so that the fitting connection portion 210 abuts against the wall surface of the fitting groove 310, achieving a tight fit between the fitting connection portion 210 and the fitting groove 310, and avoiding the problem of shaking caused by clearance fit between the fitting connection portion 210 and the fitting groove 310, that is, the existence of a fitting tolerance between the swing arm assembly and the frame body 300. This helps to improve the stability of the electronic device.

In an optional embodiment, the swing arm assembly includes one synchronous swing arm 100 and one virtual swing arm 200. The synchronous swing arm 100 and the virtual swing arm 200 are located on a same side of the base 700. The synchronous swing arm 100 and the virtual swing arm 200 are rotatably connected to the base 700 respectively. The synchronous swing arm 100 is slidably connected to the frame body 300. The virtual swing arm 200 is provided with the fitting connection portion 210. Optionally, one of the synchronous swing arm 100 and the frame body 300 is provided with a slide rail 110, and the other is provided with a slide groove 340. The slide rail 110 extends into the slide groove 340 and is in sliding fit with the slide groove 340. During the rotation of the synchronous swing arm 100 relative to the base 700, the slide rail 110 slides relative to the slide groove 340.

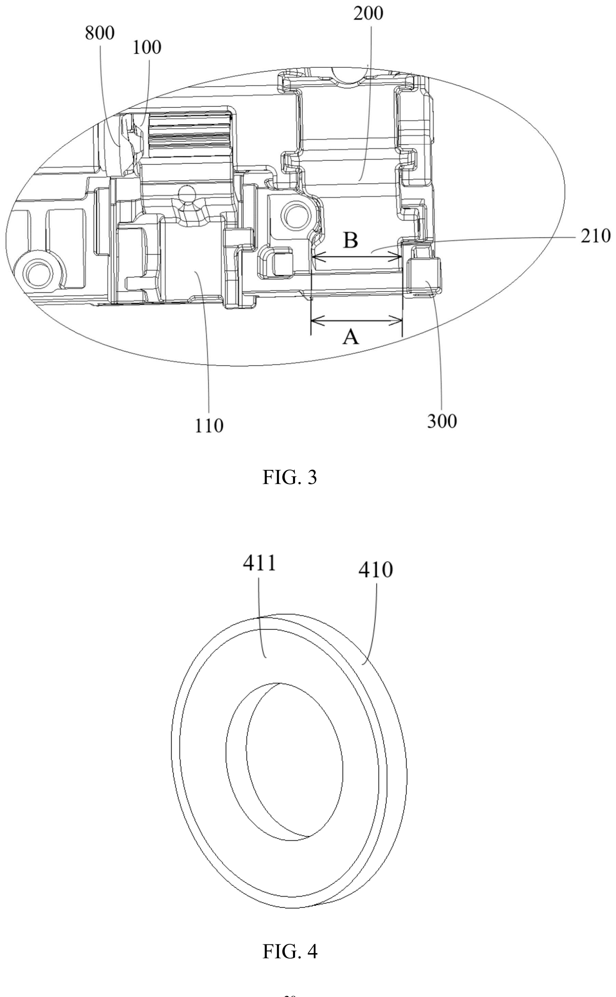

In practical application, as shown in FIG. 3, the fitting connection portion 210 is in clearance fit with the fitting groove 310. A width of the fitting groove 310 is denoted as A, a width of the fitting connection portion 210 is denoted as B, and A > B. Therefore, during the rotation of the virtual swing arm 200 and the synchronous swing arm 100 relative to the base 700, the virtual swing arm 200 is prone to shaking relative to the base 700. As shown in FIGs. 1 and 2, the hinge mechanism includes a cam seat 800. There is a connection relationship between the virtual swing arm 200 and the cam seat 800. When the virtual swing arm 200 shakes, the cam seat 800 is easily driven to shake. In addition, a curved surface of the cam seat 800 fits with a curved surface of the synchronous swing arm 100, so when the cam seat 800 shakes, the synchronous swing arm 100 is also driven to shake relative to the frame body 300. Specifically, during the rotation of the synchronous swing arm 100 relative to the base 700, the synchronous swing arm 100 drives the cam seat 800 to move, and the force on the synchronous swing arm 100 becomes increasingly large. When the curved surface of the synchronous swing arm 100 rotates to a position of a highest point of the curved surface of the cam seat 800, the force on the synchronous swing arm 100 is maximum. When the curved surface of the synchronous swing arm 100 rotates beyond the highest point, the force acting on the synchronous swing arm 100 is instantly released, causing the slide rail 110 to shake relative to the slide groove 340 (in practice, there is a gap with a size less than or equal to 0.02 mm between the slide groove 340 and the slide rail 110).

That is, the virtual swing arm 200 provides damping support to the synchronous swing arm 100. There is a fitting relationship between the virtual swing arm 200 and the synchronous swing arm 100. Therefore, when the virtual swing arm 200 shakes relative to the frame body 300, the synchronous swing arm 100 is also prone to shaking relative to the frame body 300. With the solution of this embodiment of this application, the virtual swing arm 200 is not prone to shaking relative to the frame body 300, the virtual swing arm 200 can provide stable damping support to the synchronous swing arm 100, and the synchronous swing arm 100 is not prone to generating movements other than sliding relative to the frame body 300, avoiding shaking of the synchronous swing arm 100 and helping to improve the stability of the electronic device.

Certainly, the virtual swing arm 200 may also be slidably connected to the frame body 300, and the synchronous swing arm 100 may be provided with the fitting connection portion 210.

In another embodiment, the swing arm assembly includes at least two synchronous swing arms 100 and at least two virtual swing arms 200. Two synchronous swing arms 100 are respectively located on both sides of the base 700. Two virtual swing arms 200 are respectively located on both sides of the base 700. The synchronous swing arms 100 are slidably connected to the frame body 300 respectively. The virtual swing arms 200 are each provided with the fitting connection portion 210. The fitting connection portion 210 is in one-to-one correspondence with the fitting groove 310. A deformation member is disposed between each fitting connection portion 210 and the corresponding fitting groove 310. In addition, frame bodies 300 are provided on both sides of the base 700. The synchronous swing arm 100 and the virtual swing arm 200 located on a same side of the base 700 are connected to a same frame body 300.

With this embodiment, both sides of the swing arm assembly are respectively connected to different frame bodies 300 through a structure with the fitting connection portions 210 and the fitting grooves 310. Moreover, each fitting groove 310 presses the corresponding fitting connection portion 210 through the pin shaft 500 and the deformation member respectively, so that each fitting connection portion 210 abuts against the wall surface of the corresponding fitting groove 310, ensuring that each virtual swing arm 200 and each synchronous swing arm 100 do not shake relative to the corresponding frame body 300, and helping to further improve the stability of the electronic device.

In an optional embodiment, the deformation member may include a plastic member. The pin shaft 500 is connected to the plastic member. When the pin shaft 500 rotates, the plastic member is driven to deform, so that the plastic member presses the fitting connection portion 210.

In another embodiment, the deformation member includes an elastic member 400. The pin shaft 500 is connected to the elastic member 400. When the pin shaft 500 rotates, the elastic member 400 is driven to undergo elastic deformation, so that the elastic member 400 presses the fitting connection portion 210, causing the fitting connection portion 210 to abut against the wall surface of the fitting groove 310. In this embodiment, the deformation member adopts the elastic member 400, and the elastic member 400 can exert a great force on the fitting connection portion 210 in an opposite direction by virtue of its own elastic performance, ensuring that the fitting connection portion 210 exerts a great abutting force on the wall surface of the fitting groove 310, avoiding shaking of the swing arm assembly relative to the frame body 300, and helping to improve the stability of the electronic device.

In an optional embodiment, the frame body 300 is provided with a hole for the pin shaft 500 to pass through. One of a surface of the pin shaft 500 and a wall surface of the hole is provided with a helical groove, and the other is provided with a helical protrusion. The helical protrusion extends into the helical groove, and the helical protrusion can move along a length direction of the helical groove. Axes of the helical groove and the helical protrusion are collinear with an axis of the pin shaft 500, ensuring that the pin shaft 500 moves relative to the frame body 300 along its own rotational axial direction when the pin shaft 500 rotates relative to the frame body 300.

In another embodiment, one end of the pin shaft 500 is provided with an external thread 511. The frame body 300 is provided with a threaded hole 320. The pin shaft 500 is in threaded fit with the threaded hole 320 through the external thread 511. The elastic member 400 is sleeved on the pin shaft 500. Specifically, the pin shaft 500 includes a stud 510. The stud 510 is provided with the external thread 511. The external thread 511 fits with an internal thread of the threaded hole 320. In this way, during the rotation of the pin shaft 500, the pin shaft 500 is in threaded fit with the threaded hole 320, causing the pin shaft 500 to generate linear displacement relative to the frame body 300 and the swing arm assembly, thereby causing the pin shaft 500 to abut against the elastic member 400 and allowing the elastic member 400 to undergo elastic deformation. In this embodiment, a thread locking method is adopted, which provides smoother transmission and improved abutting stability and reliability, effectively avoiding reverse movement during the process of the pin shaft 500 driving the elastic member 400 to deform. Moreover, a user can control the rotation of the pin shaft 500 as needed to adjust a deformation amount of the elastic member 400, thereby adjusting the magnitude of the abutting force of the fitting connection portion 210 on the wall surface of the fitting groove 310.

Optionally, the user can use an electric screwdriver tool such as electric screwdriver or a power screwdriver to rotate the pin shaft 500. The other end of the pin shaft 500 is provided with a structure for fitting with the electric screwdriver tool.

In an optional embodiment, as shown in FIGs. 12 and 13, the frame body 300 is further provided with a through hole 330. The through hole 330, the fitting groove 310, and the threaded hole 320 are in communication with each other sequentially. The fitting connection portion 210 is a cylindrical portion. One end of the pin shaft 500 sequentially passes through the through hole 330 and the cylindrical portion and extends into the threaded hole 320. A surface of the pin shaft 500 and one end of the elastic member 400 can be fixedly connected to each other by welding or the like. In this way, the pin shaft 500 is not only configured to fit with the threaded hole 320 to drive the elastic member 400 to undergo elastic deformation, but also configured to pass through the fitting connection portion 210, that is, the fitting connection portion 210 is connected to the frame body 300 through the pin shaft 500, helping to improve the connection stability of the swing arm assembly.

In another embodiment, the pin shaft 500 is further provided with a protrusion structure 520. The protrusion structure 520 is in limiting fit with the elastic member 400 in an axial direction of the pin shaft 500. The pin shaft 500 abuts against the elastic member 400 through the protrusion structure 520. With this embodiment, the pin shaft 500 can directly drive the elastic member 400 to undergo elastic deformation through the protrusion structure 520 without separately connecting the pin shaft 500 and the elastic member 400, which also facilitates the installation and removal of the elastic member 400.

In an optional embodiment, the elastic member 400 may be a helical spring, and the helical spring is sleeved on the outside of the pin shaft 500. In another embodiment, as shown in FIGs. 4 to 8, the elastic member 400 is a disc spring 410, and the disc spring 410 is sleeved on the outside of the pin shaft 500. With this embodiment, the disc spring 410 has the advantages of short stroke, small deformation amount, and large load-bearing capacity. Compared with other types of springs, the disc spring 410 has a high space utilization rate and is easy to maintain and replace, with high economic safety.

In an optional embodiment, only one disc spring 410 may be provided. Alternatively, at least two disc springs 410 are provided. The disc springs 410 are sequentially disposed along the axial direction of the pin shaft 500. Two adjacent disc springs 410 are symmetrically disposed. As compared with the former embodiment, in the latter embodiment, more disc springs 410 are provided, so the elastic member 400 has an increased total deformation amount and an increased total load-bearing capacity. Controlling the pin shaft 500 can increase the abutting force of the elastic member 400 on the fitting connection portion 210 and improve the degree of tight fit between the fitting connection portion 210 and the wall surface of the fitting groove 310, further avoiding shaking of the swing arm assembly and helping to further improve the stability of the electronic device. Moreover, the two adjacent disc springs 410 are symmetrically disposed, helping the two disc springs 410 to deform respectively.

In an optional embodiment, the disc spring 410 has a conical structure. The disc spring 410 has a first end opening and a second end opening. An area of the first end opening is larger than an area of the second end opening. The disc spring 410 has a concave surface 411 and a convex surface 412 facing away from each other. The convex surfaces 412 of two adjacent disc springs 410 are opposite each other, that is, the second end openings of the two disc springs 410 are in direct communication with each other. In another embodiment, as shown in FIG. 12, the concave surfaces 411 of two adjacent disc springs 410 are opposite each other, that is, the first end openings of the two disc springs 410 are in direct communication with each other. In this way, the protrusion structure 520 of the pin shaft 500 acts on an end of the disc spring 410 with a smaller end opening, helping to stably apply force to the entire disc spring 410 through the end with a smaller end opening, thereby driving the disc spring 410 to undergo elastic deformation, and preventing an end with a larger end opening of the disc spring 410 from facing the protrusion structure 520. The protrusion structure 520 directly acts on the concave surface 411 of the disc spring 410, causing the disc spring 410 to deform only partially. Moreover, the end with a smaller end opening of the disc spring 410 faces the protrusion structure 520, allowing the protrusion structure 520 to be set smaller.

In an optional embodiment, the limiting assembly further includes a gasket 600. The gasket 600 is sleeved on the outside of the pin shaft 500, and the gasket 600 is located between the protrusion structure 520 and the elastic member 400. With this embodiment, since the hardness of the gasket 600 is high, the pin shaft 500 applies force to the elastic member 400 through the gasket 600, ensuring that a surface of the gasket 600 facing the elastic member 400 uniformly applies force to the elastic member 400, and preventing the protrusion structure 520 from directly applying a great force to a portion of the elastic member 400 and causing damage to the elastic member 400.

Certainly, in another embodiment, the limiting assembly may not be provided with the gasket 600, that is, the protrusion structure 520 of the pin shaft 500 is in direct contact with the elastic member 400.

In an optional embodiment, the protrusion structure 520 may be a block-shaped protrusion. Alternatively, the protrusion structure 520 is an annular protrusion, and an axis of the annular protrusion is collinear with the axis of the pin shaft 500. As compared with the former embodiment, in the latter embodiment, the annular protrusion extends along a circumferential direction of the pin shaft 500, so different positions of the pin shaft 500 respectively act on different positions of the elastic member 400 through the annular protrusion, that is, the pin shaft 500 applies force to various positions of the elastic member 400 through the annular protrusion, helping the entire elastic member 400 to stably undergo elastic deformation.

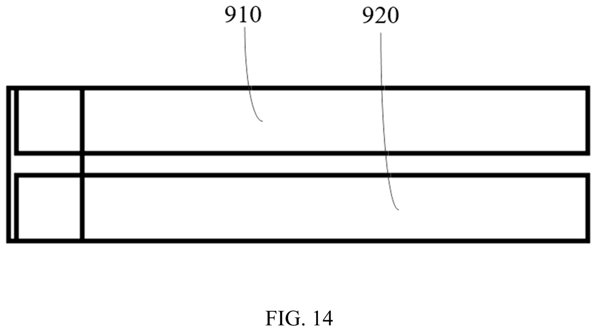

Based on the hinge mechanism disclosed in this application, an embodiment of this application further discloses an electronic device. As shown in FIG. 14, the electronic device includes a first device body 910, a second device body 920, and the hinge mechanism in the foregoing embodiments. The first device body 910 or the second device body 920 is connected to the frame body 300, and the first device body 910 is connected to the second device body 920 through the hinge mechanism. During relative rotation of the first device body 910 and the second device body 920, the electronic device switches between an unfolded state and a folded state. Specifically, the synchronous swing arm 100 is connected to the first device body 910 or the second device body 920. With this arrangement, the hinge mechanism can prevent the electronic device from shaking, helping to improve the stability of the electronic device.

The electronic device disclosed in this embodiment of this application may be a smartphone, a tablet computer, an e-book reader, a wearable device, an electronic game console, or the like. The specific type of the electronic device is not limited in this embodiment of this application.

The embodiments of this application are described above with reference to the accompanying drawings. However, this application is not limited to the foregoing specific implementations. The foregoing specific implementations are merely illustrative rather than restrictive. Inspired by this application, those of ordinary skill in the art may make many other forms without departing from the essence of this application and the protection scope of the claims, and all such forms shall fall within the protection scope of this application.

## Claims

1. A hinge mechanism, comprising a base, a swing arm assembly, a frame body, and a limiting assembly, wherein
a first end of the swing arm assembly is rotatably connected to the base, a second end of the swing arm assembly is connected to the frame body, the swing arm assembly is provided with a fitting connection portion, the frame body is provided with a fitting groove, and the fitting connection portion extends into the fitting groove; and
the limiting assembly comprises a pin shaft and a deformation member, wherein the deformation member is disposed between the fitting connection portion and a wall surface of the fitting groove, the pin shaft is inserted through the frame body and abuts against the deformation member, and during rotation of the pin shaft relative to the frame body, the deformation member deforms so as to limit the frame body and the swing arm assembly in a rotational axial direction of the pin shaft.

2. The hinge mechanism according to claim 1, wherein the deformation member comprises an elastic member, the pin shaft is connected to the elastic member, and when the pin shaft rotates, the elastic member is driven to undergo elastic deformation, so that the elastic member presses the fitting connection portion.

3. The hinge mechanism according to claim 2, wherein one end of the pin shaft is provided with an external thread, the frame body is provided with a threaded hole, the pin shaft is in threaded fit with the threaded hole through the external thread, and the elastic member is sleeved on the pin shaft.

4. The hinge mechanism according to claim 3, wherein the frame body is further provided with a through hole; the through hole, the fitting groove, and the threaded hole are in communication with each other sequentially; the fitting connection portion is a cylindrical portion; one end of the pin shaft sequentially passes through the through hole and the cylindrical portion and extends into the threaded hole; the pin shaft is further provided with a protrusion structure; the protrusion structure is in limiting fit with the elastic member in an axial direction of the pin shaft; and the pin shaft abuts against the elastic member through the protrusion structure.

5. The hinge mechanism according to claim 4, wherein the limiting assembly further comprises a gasket, the gasket is sleeved on the outside of the pin shaft, and the gasket is located between the protrusion structure and the elastic member.

6. The hinge mechanism according to claim 4, wherein the protrusion structure is an annular protrusion, and an axis of the annular protrusion is collinear with an axis of the pin shaft.

7. The hinge mechanism according to claim 2, wherein the elastic member is a disc spring, and the disc spring is sleeved on the outside of the pin shaft.

8. The hinge mechanism according to claim 7, wherein a quantity of the disc springs is at least two, the disc springs are sequentially disposed along an axial direction of the pin shaft, and two adjacent disc springs are symmetrically disposed.

9. The hinge mechanism according to claim 8, wherein the disc spring has a conical structure, the disc spring has a concave surface and a convex surface facing away from each other, and the concave surfaces of the two adjacent disc springs are opposite each other.

10. The hinge mechanism according to claim 1, wherein the swing arm assembly comprises at least two synchronous swing arms and at least two virtual swing arms, wherein two synchronous swing arms are respectively located on both sides of the base; two virtual swing arms are respectively located on both sides of the base; the synchronous swing arms and the virtual swing arms are rotatably connected to the base respectively; the synchronous swing arms are slidably connected to the frame body respectively; the virtual swing arms are each provided with the fitting connection portion; the fitting connection portion is in one-to-one correspondence with the fitting groove; and the deformation member is disposed between each fitting connection portion and the corresponding fitting groove.

11. An electronic device, comprising a first device body, a second device body, and the hinge mechanism according to any one of claims 1 to 10, wherein the first device body or the second device body is connected to the frame body, and the first device body is connected to the second device body through the hinge mechanism; and
during relative rotation of the first device body and the second device body, the electronic device switches between an unfolded state and a folded state.
